# EUROPEAN PATENT APPLICATION

(11) **EP 2 866 217 A1**
(43) Date of publication of application: **29.04.2015**
(21) Application number: 13190316.3
(22) Date of filing: 25.10.2013
(51) Int. Cl.: G09B 5/04, H04S 7/00, G01C 21/34

(54) **An audio information system based on zones and contexts**

(71) Applicant: GN Store Nord A/S, 2750 Ballerup (DK)
(72) Inventor: Mossner, Peter, 2770 Kastrup (DK); Sørensen, Peter Schou, 2500 Valby (DK)
(74) Representative: Zacco Denmark A/S

(57) **Abstract**

This invention relates to an audio information system comprising at least one audio unit configured to be head worn and configured to communicate with the at least one portable terminal and which least one audio unit configured to sound an acoustic scene to a user using the least one audio unit; which at least one portable terminal configured to retrieve and render object data into said acoustic scene by an acoustic rendering algorithm and to transmit said acoustic scene to said at least one audio unit, which least one portable terminal being configured to perform an establishment of at least one zone that spans a bounded space around a geographical position, which zone has an outside and an inside and which said acoustic scene is an outside acoustic scene when said least one audio unit is not inside at least one zone, or an inside acoustic scene when said least one audio unit is inside at least one zone.

## Description

### Field of invention

This invention relates to an audio information system comprising at least one audio unit configured to be head worn and configured to communicate with the at least one portable terminal and which least one audio unit configured to sound an acoustic scene to a user using the least one audio unit; which at least one portable terminal configured to retrieve and render object data into said acoustic scene by an acoustic rendering algorithm and to transmit said acoustic scene to said at least one audio unit, which least one portable terminal being configured to perform an establishment of at least one zone that spans a bounded space around a geographical position, which zone has an outside and an inside and which said acoustic scene is an outside acoustic scene when said least one audio unit is not inside at least one zone, or an inside acoustic scene when said least one audio unit is inside at least one zone.

### Background of the invention

Humans are perceptive to the environment they operate in. In many given situations constraints on the environment or designed environments enhances, focuses, or educates a person better or makes the communicative setting clearer and thus enables the person to become more perceptive.

Learning and dissemination of knowledge is important for the continued development of the industrial society. Hence, tools that can enhance learning and/or dissemination of knowledge are important tools.

Speech is an important carrier of information and knowledge and it is very well known that a subject can be taught to a pupil by a mentor.

Some audio learning systems are known from museums. However, such systems are sequential and require the pupil or listener to be relatively stationary or conform to the pre-coded or pre-planned sequence of events.

It is known that it can be difficult to concentrate on (the sound of a)voice over long periods of time and thus learning can be difficult. Likewise, it is known that it can be difficult to remember or memorise information from a voice for later reflection.

Although it is known that learning, at least for some individuals, is enhanced when physical activity is performed either during the actual learning or regularly in between slots of learning, then learning is increased, barriers remain in making such learning systems and there are barriers to distribute learning systems since every single learning system has to be tailor-made to a new setting.

Technical implementations that will improve the communicative setting to make communication clearer and thus the user more perceptive - or less perceptive if desired - are generally needed.

It is an objective of this invention to provide technical implementation(s) that will improve a communicative environment available to a user.

In this aspect, an objective is to provide a tool to improve learning by a user.

### Summary

An objective of the invention is achieved by an audio information system comprising at least one audio unit configured to be head worn and configured to communicate with the at least one portable terminal and which least one audio unit configured to sound an acoustic scene to a user using the least one audio unit; which at least one portable terminal configured to retrieve and render object data into said acoustic scene by an acoustic rendering algorithm and to transmit said acoustic scene to said at least one audio unit, which least one portable terminal being configured to perform an establishment of at least one zone that spans a bounded space around a geographical position, which zone has an outside and an inside and which acoustic scene is an outside acoustic scene when said least one audio unit is not inside at least one zone, or an inside acoustic scene when said least one audio unit is inside at least one zone.

By establishing at least one zone as disclosed the user will be in a setting that clarifies or focuses a communicative environment. In a further aspect the establishment of a zone provides for improved learning in at least an aspect of being able to provide access to different zones from the outside and in an aspect of being able to provide access to tailor-made learning inside a zone.

By establishment a person skilled in the art will understand that the zone and the acoustic scene may be established or made or become available to the user. A zone or acoustic scene may be latent, but may not active. As such an establishment may be activation in a situation where the zone is predefined. In another embodiment a zone or acoustic scene may initially just be established for further configuration, activation and/or inclusion of features.

An establishment may be initiated as a function of or dependent on events or actions.

The rendered acoustic information may be a 3-dimensional (3D) sound, wherein the rendered acoustic information may include a sound adapted to a geographical position, wherein the sound may be dependent on a distance value and an orientation value to the geographical position.

The portable terminal may be configured to transmit rendered acoustic information to an audio unit, wherein the audio unit may be configured to recreate the rendered acoustic information into a 3D sound and emitting the 3D sound. The emitted 3D sound may create a 3D acoustic scene to a user.

In one or more embodiments the portable terminal may be a smart phone, a laptop, a tablet, a headset with in-built processor and wireless connection, or an electronic intelligent processor device. The portable terminal may be configured to comprise rendered acoustic information, wherein rendered acoustic information may include an acoustic scene augmenting local environment. The local environment may be a school area, a local park, inner city, a boat and a building and/or indoor constructions etc. The portable terminal may at least include 2g, 3g, 4g and 5g wireless network, a GPS unit, an orientation unit, a communication interface and a display unit. The orientation unit may include a gyro scope, an accelerometer and/or an electronic compass. A communication interface may receive and/or transmit acoustic information, an acoustic scene, rendered acoustic scene information and/or recorded acoustic information.

The audio based learning system may comprise rendered acoustic information, wherein the rendered acoustic information may comprise sounds adapted to an object or any kind of a physical element/object.

An augmented reality is a view of a local environment whose element(s) may be augmented by generated input, such as sound.

The audio based learning system comprises an audio unit, wherein the audio unit may comprise at least one speaker, a headband or a neckband, a communication interface and an inertial measurement unit. The communication interface may be wired or wireless. The inertial measurement may include a geographical position unit and an orientation unit. Furthermore, the audio unit may comprise at least one microphone.

In an embodiment the establishment of at least one zone is performed based on a context state which the audio unit is in, is in the vicinity of, or is chosen to be in, and which context state is determined by a context determining means.

By a context or a context state is understood circumstances under which things happen or take place or under which things are to be considered.

In particular, the context is understood from a point of view i.e. from where the audio unit is or is in. In some cases the context is in the "vicinity of" the audio unit when the user of the audio unit observe or has an interest in a setting or function that is not at the exact location but near enough to have an impact. It could be visible or hear able. Likewise, the context could be chosen as a desirable or designed context in the sense of a virtual context.

A context or a context state may be determined by context determining means. The means may be for choosing predetermined context states. The means may be based on sensory means comprising sensors for determining a context state using algorithms or look-up tables to determine a context.

The context determining means may use a geographical position and functionally from that information from a geographical server to establish the context state.

In each case, the audio information system is configured to establish a zone with an acoustic scene being an outside acoustic scene representing the zone and an inside acoustic scene with different objects acoustically rendered into the scene.

In an embodiment the audio unit comprises a geographical position unit configured to estimate the geographical position of the audio unit.

A user wearing the portable terminal and the audio unit may experience a 3D acoustic scene/universe. When the user is moving away from an object being augmented by a 3D sound, the user will experience that the 3D sound level and/or the acoustic information would change, and thereby, causing a change in the 3D acoustic scene.

In one or more embodiments the geographical position unit may comprise a global positioning system (GPS) unit for receiving satellite signals for determining the geographical position of the audio unit. Throughout the present disclosure, the term GPS-unit is used to designate a receiver of satellite signals of any satellite navigation system that provides location and time information anywhere on or near the Earth, such as the satellite navigation system maintained by the United States government and freely accessible to anyone with a GPS receiver and typically designated "the GPS-system", the Russian Global Navigation Satellite System (GLONASS), the European Union Galileo navigation system, the Chinese Compass navigation system, the Indian Regional Navigational Satellite System, etc, and also including augmented GPS, such as StarFire, Omnistar, the Indian GPS Aided Geo Augmented Navigation (GAGAN), the European Geostationary Navigation Overlay Service (EGNOS), the Japanese Multifunctional Satellite Augmentation System (MSAS), etc.

In one or more embodiments the geographical position unit is a Wi-Fi-network with different stations or fix points and means for determining a position by triangulation or alike geometrical functions.

In an embodiment the audio unit comprises an orientation unit for estimating a current orientation of a user when the user has placed the orientation unit in its intended operational position.

In one or more embodiments the orientation unit may comprise a gyroscope, an electronic compass, and/or an accelerometer for measuring head orientation of a user wearing an audio unit.

A user wearing a portable terminal and the audio unit would experience an improved spatially interrelation since the 3D acoustic scene would change according to his/her position and orientation in the local environment, e.g. when the user is moving away from a zone the user would experience a 3D sound level decrease and/or a change of an acoustic information. If the user is changing his/her orientation the user would experience a change of sound levels of the plurality of zones, e.g. when the user is changing the orientation, and thereby, changing attention from a first zone to a second zone, the sound level of the second zone compared to the sound level of the first zone would be higher. When the user enters a zone, the user would experience a change in the 3D acoustic scene, and when being inside the zone, the 3D acoustic scene may depend on the position and the orientation according to the least one object.

Thereby, since the 3D acoustic scene depends on the position and the orientation, the spatially interrelation between a zone and the audio unit is further improved.

In an embodiment the portable terminal is configured to communicate and share an acoustic scene with at least one other terminal.

In one or more embodiments the terminal may be configured to communicate and share acoustic scenes with at least one other terminal. The advantage of having a terminal being able to communicate and share acoustic scenes with at least one other terminal is that the audio based learning system may be used in different local environments and/or by plurality of users being in at least two teams.

In a particular embodiment a recording can be made and played back at a later point in time. At that later point in time a tutor may evaluate the recording and may even provide comments as voice over. In yet another embodiment the commented recording may be used by the user to receive the comments as feedback and perhaps even replay the original event.

In one or more embodiments one audio unit may be a master system and at least one other audio unit may be a slave system. The advantage of having a master/slave system is that the audio based learning system may comprise a plurality of users being in a plurality of teams, wherein each team may have their own leader. The leader of a first team may comprise an audio unit being the master system and the other user of the first team may each comprise an audio unit being the slave system. The advantage of this is that the audio based learning system may teach the users how to cooperate and how to be a leader.

In an embodiment an audio information system may be configured to determine the context state by means of sensory means.

In an embodiment an audio information system may be configured to determine the context state as a function of context information from a geographical server or/and as a function of a geographical position obtained by the geographical position means.

In an embodiment an audio information system may be configured to determine a context state as a function of input from a movement detector such as an accelerometer, a gyroscope and/or a GPS, which function is an algorithm, a lookup table configured to determine the context state amongst at least some predefined contexts such as sleeping, sitting, walking, running, resting, emotions.

In an embodiment an audio information system may be configured to establish an acoustic scene that will alter the acoustic scene by an altering object data as a function of an algorithm or a lookup table so as to either emphasize a context state, de-emphasize a context state, maintain a context state, split a context state, merge more context states, or morph more context states .

In an embodiment the inside acoustic scene information comprising at least one post preferably with a task.

In one or more embodiments the inside acoustic scene information may comprise at least one post preferably with a task most preferably an interactive task. In one or more embodiments at least one post may comprise at least one task, wherein the at least one task may be an interactive task or a passive task. The interactive task may include an assignment to be solved by a user of an audio unit. The passive task may include info or hints about a subject.

In one or more embodiments at least two posts including at least a first and a second post. Both posts may include at least one task. The at least first post may interact with the at least second post, and thereby, the outcome of the at least first post may change the task of the at least second post. The advantage of this is that the audio based learning system may tailor at least one task according to the outcome of another post. The effect is that the audio based learning system may effectively and in a targeted or focused way enable the learning of the user.

There may be active posts or passive posts. An active post may be a post that a user can interact with. A passive post may be a post that does not interact. A passive post may however be dynamic and change in time and space. A background scene may be formed by one or more passive posts.

In one or more embodiments the audio unit may comprise a geographical position unit configured to estimate the geographical position of the audio unit.

In one aspect of the invention a setup tool of an audio information system as disclosed is configured to interactively create, store, edit at least one acoustic scene and associate said at least one acoustic scene with at least one context state.

In one or more embodiments the setup tool may be configured to interactively create an ensemble which is tailored to at least one user. The setup tool may use the received personal information of at least one user to create one or more tailored ensemble. The received personal information may be from a social network.

The setup tool may be configured to be used by an administrator, a master user, a teacher or organiser, or an individual user.

The advantage of the setup tool is that the audio based learning system may be able to create an ensemble which has the most interest of the user, e.g. the user is at the moment interested in football and the setup tool may create an ensemble which is only about football. The selected ensemble would then enhance his encourage to learn more about football. Furthermore, selecting an environment that the user knows will make the user more susceptible for learning simply by being more stimulated or concentrated in that particular environment. Thus, the setup tool can create ensembles with different themes and different themes can easily be used effectively with the same learning objectives.

In other embodiments the setup tool may be in an augmented reality.

In an embodiment of a setup tool of a audio information system, the setup tool is further configured to access geospatial information about a local environment from a geospatial information server and to setup at least one acoustic scene to associate said at least one acoustic scene with at least one context state as a function of the local environment.

In one or more embodiments the setup tool may further comprise an auto placement algorithm configured to access a local environment of geospatial information from a geospatial information server and to setup at least one ensemble with at least one zone and which auto placement algorithm may be configured to perform a placement of each zone within the local environment as a function of the local environment.

The advantage of the auto placement algorithm of an ensemble is that the ensemble may be transferred from a local environment to another local environment without generating a new ensemble, and thereby, saving time would encourage the user to use the audio based learning system more frequently.

In an embodiment the setup tool is configured to make context information about a context state, at least one acoustic scene, and possibly a local environment available to an audio information system.

In one aspect of the intention a distribution system of an audio information system and a setup tool as disclosed where the distribution system is configured to distribute at least one of an acoustic scene, a context state, a local environment so that an acoustic scene, a context state, a local environment is available to an audio information system.

In an embodiment the distribution system and audio information system are configured to make any acoustic scene, context state, local environment, and available to an audio information system at least by a method of subscription, a method of push technology, a method of pull technology, either configured as one-to-one or configured as one-to-many.

### Brief Description of Drawings

Embodiments of the invention will be described in the figures, whereon:
Fig. 1 illustrates an audio information system ;
Fig. 2 illustrates a 2D and 3D zone with a bounded area encapsulating an audio scene;
Fig. 3 illustrates an audio information system with an audio unit with a positioning and an orientation unit;
Fig. 4 illustrates an inside acoustic scene;
Fig. 5 illustrates an user in an environment with a context, the established zones with outside acoustic scenes, and the user when inside an acoustic scene based on a context;
Fig. 6 illustrates an environment with different contexts: Nature, Leisure, Traffic, Sea, Community/Cities -just to exemplify a few;
Fig. 7 illustrates an environment whit multiple context, and a breakdown of different contexts;
Fig. 8 illustrates a user in a geographical environment in an urban setting with multiple contexts, a selection of contexts and an establishment of zones and outside acoustic scenes, routes from the current geographical position of the user, and the user inside an zone with a context resulting in an inside acoustic scene;
Fig. 9 illustrates an environment with multiple contexts, establishment of zones and different navigation routes between the established zones;
Fig. 10 illustrates embodiments of determining a context state: A) by means of choosing predetermined contexts, B) by means of sensors, and C) by means of geographical position and data from a geographical server;
Fig. 11 illustrates embodiment of a sensor determining contexts of a person such as "sleeping", "sitting", "walking", "running", or moods such as "distressed" based on sensory inputs such as movements or orientations, and
Fig. 12 illustrates a setup tool of an audio information system configured to interactively create, store, and edit and ensemble of at least one acoustic scene and associate this with a context state.

**Detailed Description**

| **Item** | **No** |
|---|---|
| Audio information system | 1 |
| Audio unit | 2 |
| Communication link | 3 |
| Portable Terminal | 5 |
| Headset | 6 |
| User | 8 |
| Acoustic Scene | 10 |
| Object Data | 12 |
| Acoustic Rendering Algorithm | 15 |
| Establishment | 20 |
| Zone | 22 |
| Geographic Position | 25 |
| Zone Outside | 27 |
| Zone Inside | 28 |
| Boundary | 29 |
| Boundary space | 30 |
| Outside Acoustic Scene | 32 |
| Inside Acoustic Scene | 34 |
| Post | 40 |
| Task | 42 |
| Interactive task | 43 |
| Context | 50 |
| Context information | 52 |
| Sub context | 53 |
| Context determining means | 55 |
| Sensory means | 56 |
| Predetermined context state | 57 |
| Sensor | 58 |
| Audio/Visual sensor | 59 |
| Geographical position unit | 60 |
| Orientation unit | 62 |
| Reference system | 63 |
| Compass | 65 |
| Satellites | 66 |
| GPS Unit | 67 |
| Accelerometer | 68 |
| Gyroscope | 69 |
| Geospatial information | 70 |
| Local environment | 72 |
| Geospatial information server | 74 |
| Route | 75 |
| Modifier | 80 |
| Emphasize | 81 |
| De-emphasize | 82 |
| Maintain | 83 |
| Sleeping | 91 |
| Sitting | 92 |
| Walking | 93 |
| Running | 94 |
| Emotional | 95 |
| Setup tool | 100 |
| Ensemble | 105 |
| Context Editor | 110 |
| Zone Editor | 120 |
| Geographical Editor | 130 |
| Setup Algorithm | 140 |
| Manual Setup Algorithm | 141 |
| Auto Setup Algorithm | 142 |
| Random Setup Algorithm | 143 |

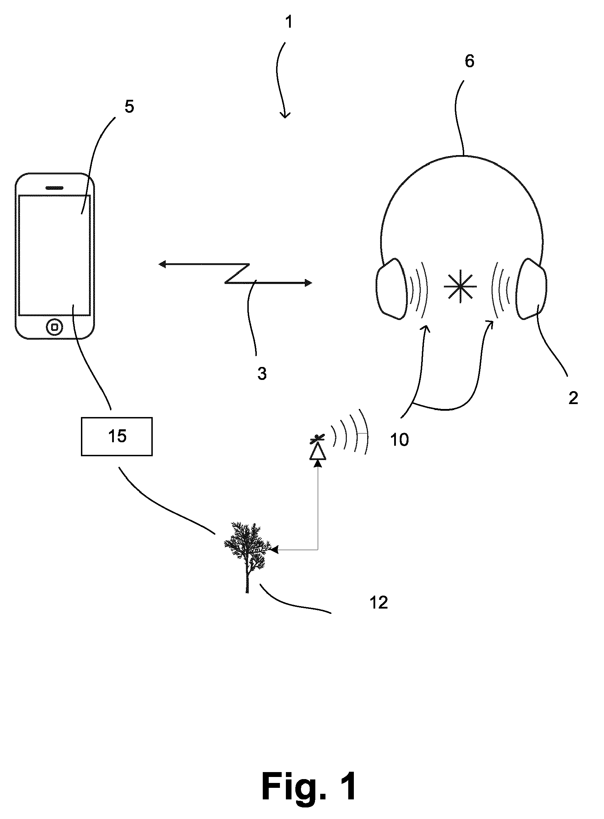

Fig. 1 Illustrates an audio information system 1 with an audio unit 2 configured to communicate via a communication link 3 with a portable terminal 5. The portable terminal 5 may have a computational unit or the portable terminal 5 may be integrated with the audio unit 2 so that the audio information system 1 is portable and preferably configured to be worn on the head of a user in an intended position. In an embodiment the audio unit 2 is a headset 6 and the portable terminal 5 is a so-called Smartphone. In an embodiment the audio unit 2 and the portable terminal 5 is integrated in a headset 6. A person skilled in the art will easily be able to configure or re-configure placement of the portable terminal 5 in relation to the audio unit 2.

The audio unit 2 may be configured to sound an acoustic scene 10 to a user, when the audio unit 2 is used or placed as intended. The acoustic scene 10 may be established from object data 12 that are processed by an acoustic rendering algorithm 15, preferably implemented in the portable terminal 5.

As an example, a tree is an object data 12, said tree corresponds to a sound in the acoustic scene 10.

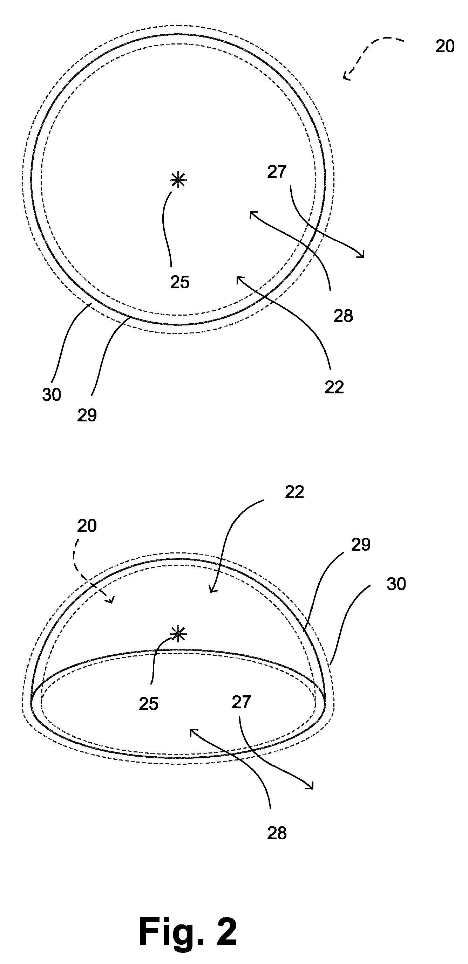

Fig. 2 illustrates a 2D and a 3D version of the establishment 20 of a zone 22 around a geographic position 25. The zone has a zone outside 27 and a zone inside 28 separated by a boundary 29. The separation may be a boundary space 30.

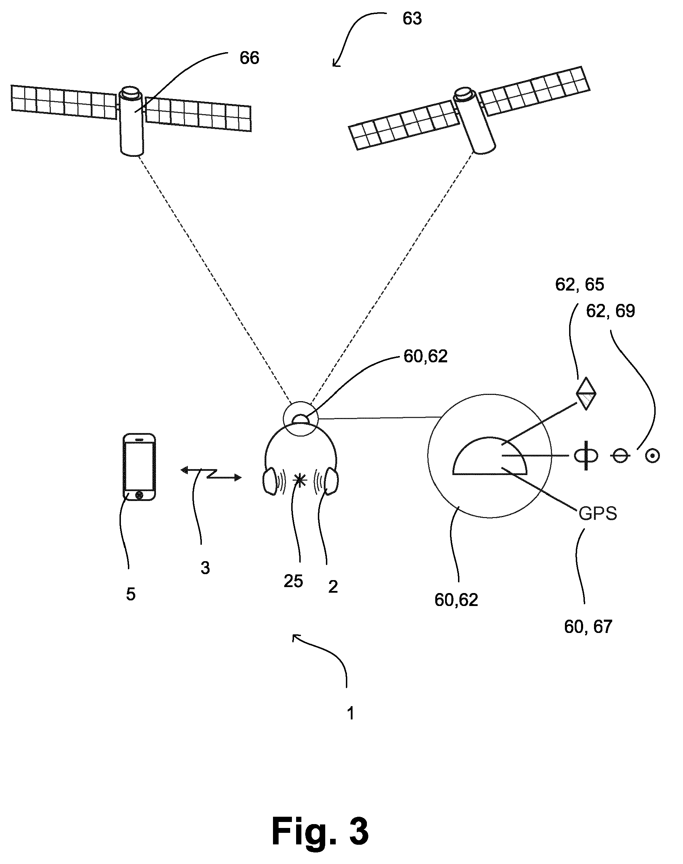

Fig. 3 illustrates an audio information system 1 in continuation of figure 1. There is an audio unit 2 with a communication link 3 with a portable terminal 5. The audio information system 1 is positioned in a reference system 63 and has a geographical position unit 60 configured for determining the geographical position 25. The geographical position unit 60 is placed in the audio unit 2 formed as a headset. Preferably the headset is configured to be worn on the head of a user as intended.

A reference system 63 may comprise of satellites 66 and the geographical position unit 60 may be implemented as a GPS unit 67.

In a variant, the reference system 63 is a wireless network with units configured to determine the location and or the orientation based on the communication between a wireless communication unit placed in either the portable terminal 5 or the audio unit 2 of the audio based information system 1.

In this embodiment, the audio unit 2 further has an orientation unit 62 configured to determine the orientation of the audio unit 2 preferably formed as a headset configured to be worn so that the orientation of the user's head is reflected by the output of the orientation unit 62. The orientation unit 62 may comprise of a compass 65, a gyroscope 69 or both. The audio unit 2 may also comprise of an accelerometer 68 (not shown here).

In a variant of this embodiment, the geographical positioning unit 60 or the orientation unit 62 may be located in the portable terminal 5, which may be configured to be operated as a pointer by the user.

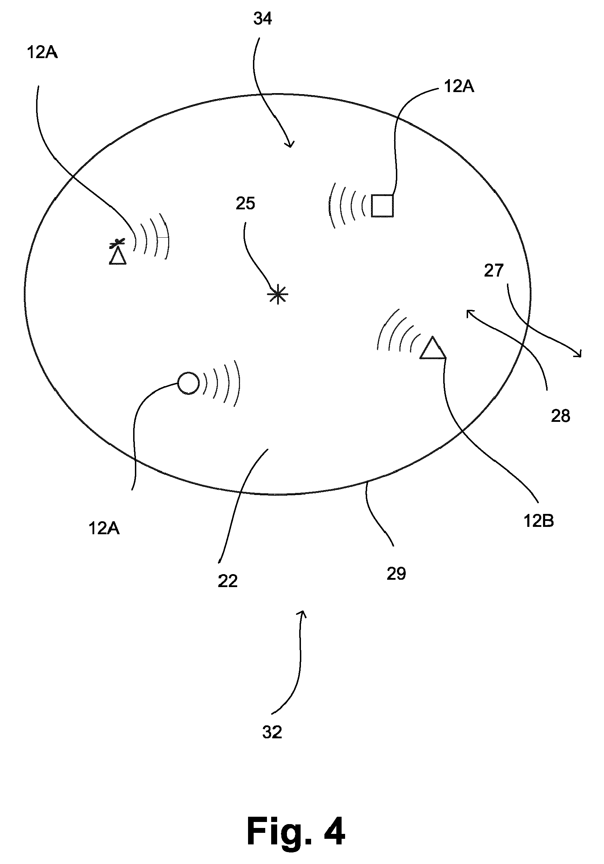

Fig. 4 illustrates an acoustic scene 10 established as an inside acoustic scene 34, which is inside the zone 22 about the geographical position 25. The inside acoustic scene 34 is established by an acoustic rendering algorithm 15 configured to make object data 12 become available as sounds spatially oriented with reference to the geographical position 25, where the audio unit 2 is located. In this embodiment, a first data object 12A will be part of the inside acoustic scene 34 and acoustically rendered 15 to be sounded to the user as being positioned relative to the location of the audio unit 2. Likewise, a second object data 12B, a third 12C and a fourth 12C are acoustically rendered by the acoustic rendering algorithm 15 as being spatially interrelated.

A user moving around in a environment would experience a spatial interrelation between the audio unit 2 and the plurality of objects 12, since when the user is moving towards or away from a zone 22 the user would experience that the 3D acoustic scene 10 would change according to his/her position, e.g. the 2D/3D sound level would decrease and/or a change an acoustic information when the user is moving away from the zone 22.

When the user enters a zone 22 the user may experiencing a change in the 2D/3D acoustic scene 10, and when being inside 28 the zone 22 the change in the 2D/3D inside acoustic scene 34 may depend on the position of the user with the audio unit 2.

Again, the audio unit 2 may provide directional information about the objects 12 or posts in the acoustic scene 34 according to where the user is.

In one or more embodiments the audio unit 2 may comprise of an orientation unit 62 for estimating a current orientation of a user when the user has placed the orientation unit 62 in its intended operational position.

A user wearing the audio information system 1 and i.e. either the portable terminal 5 or the audio unit 2 or both would experience an improved spatial interrelation since the 2D/3D acoustic scene 10 would change according to his/her position and orientation in the environment, e.g. when the user is moving away from a zone 22 and outside 27 of a zone 22 the user would experience a 2D/3D sound level decrease and/or a change of an acoustic information so that the acoustic scene 10 becomes an outside acoustic scene 32. The outside acoustic scene 32 may likewise be rendered to form a landscape of sounds representing each zone 22 and their spatial relations.

Thus, when in the zone outside 27 of a zone 22, the audio unit 2 is configured to sound an outside acoustic scene 32 and when in the zone inside 28 of a zone 22, the audio unit 2 is configured to sound an inside acoustic scene 34.

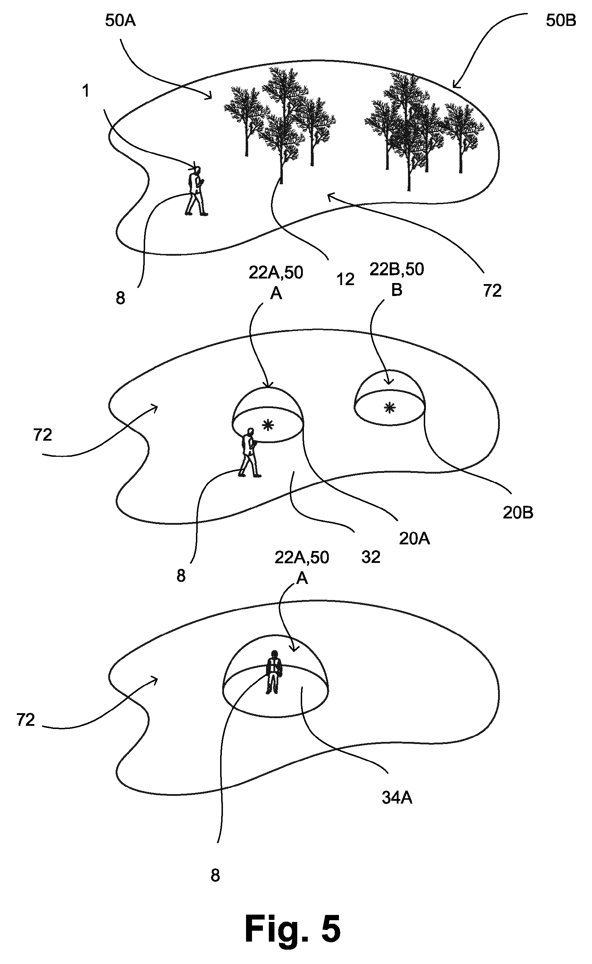

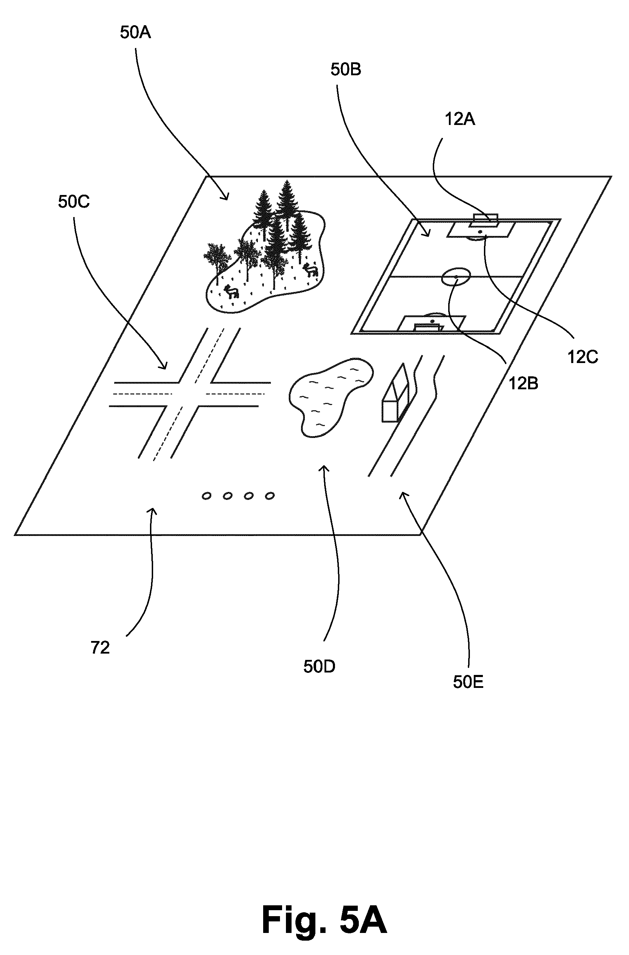

Fig. 5 illustrates a user 8 with an audio information system 1 in an environment or local environment 72 with at least one context 50.

In this illustrative example the local environment 72 is a field with two groups of trees. The context 50 may be "trees". When the user 8 is not in the vicinity of the trees or when the user 8 - by means of the audio information system 1- is out of context 50 of threes, the audio based information system 1 will not sound any particular sound to the user 8.

As the user enters, by coming closer to the trees, by choice or otherwise, the context 50 of trees, here groups of trees representing a first context 50A and a second context 50B, the audio information system 1 performs an establishment 20, here a first establishment 20A and a second establishment 20B of a zone 22, here a first zone 22A and a second zone 22B. Each zone 22 has a sound being acoustically rendered to an outside acoustic scene 32 made available to the user 8 via the audio unit 8. In an embodiment the outside acoustic scene 32 is formed by sounds representative of the particular context 50. In this example, the outside acoustic scene 34 may consist of two groups of sounds of leafs in the wind representing the context 50 of a group of trees.

When the user 8 approaches a zone 22, say the first zone 22A, and enters the first zone 22A then the audio information system 1 acoustically renders 15 a first inside acoustic scene 34A comprising object data preferably with sounds representing the context 50 of trees.

Thus, the audio information system 1 in the context 50 has established 20 zones 22 forming an outside acoustic scene 32 when the user 8 is outside 27 every zone 20, and forming an inside acoustic scene 34 when the user 8 is in the zone inside 28 a zone 20.

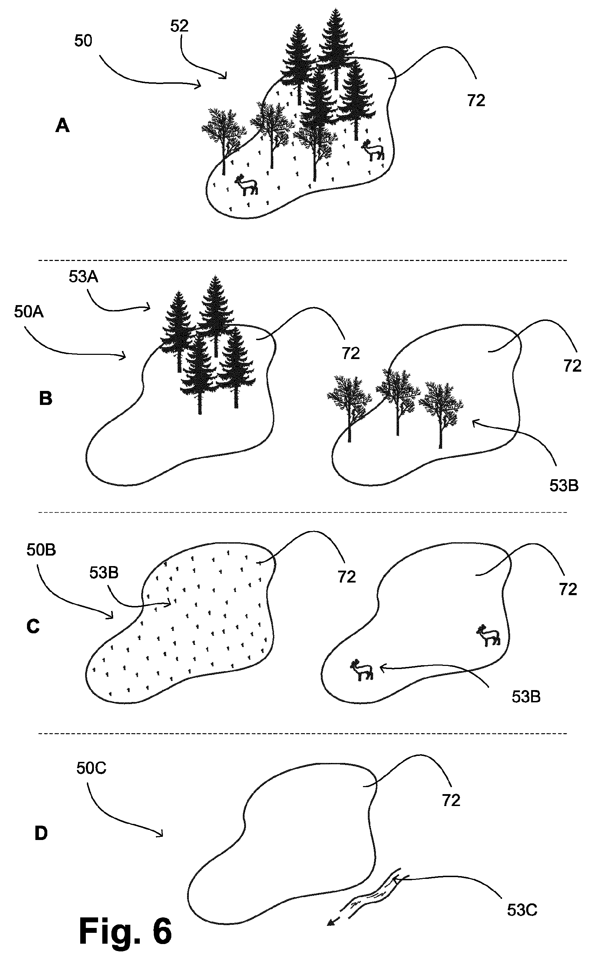

Fig. 6 illustrates an environment 72 with different or multiple contexts 50. In this environment the contexts 50 are a Nature context 50A, a leisure context 50B, a traffic context 50C, a lake or water context 50D, and a Community/City/Urban context 50E-just to exemplify a few contexts.

In the example of the leisure context 50B a sports field is used. A data object 12 characteristic of a sports field is used to represent or form the acoustic scene 10. A goal 12A, a mid-field 12B and a penalty area 12C are all examples of data objects 12 of a sports field.

Likewise, each other context 50 may have a characteristic of data objects 12.

For example, in the nature context 50A there may be trees, trees of different sorts, plants and animals either as separate sub contexts 53 (not directly shown here) or as objects 12 for acoustically rendering 15 a scene.

For example, in the traffic context 50C there may be a crossing, with traffic regulations and rules, vehicles such as cars and bikes and people such as drivers and pedestrians as separate sub contexts 53 or as data objects 12 for acoustically rendering 15 a scene.

For example, in the lake context 50D there may be animals such as fish as a sub context 53 and plants as another sub context 52.

For example, in the urban context 50E there may be a road and buildings each being a context 50. The roads may have contexts of navigation, safety. Buildings may have contexts of restaurants, shopping, housing and hotels, just to mention a few.

In the before mentioned examples each sub context 53 may be a context 50 on its own or contexts may be ordered in a hierarchy.

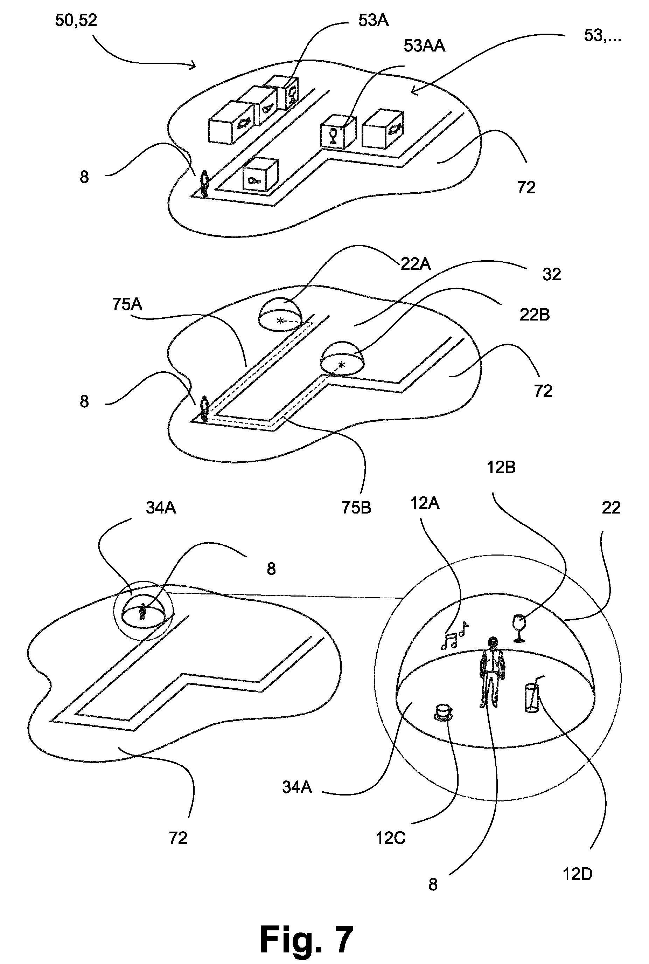

Fig. 7 illustrates a local environment 72 with different or multiple contexts 50 or contexts , and a breakdown of different contexts 50 with different context information 52.

Figure A shows a nature or a Forest context 50 with context information 52. In the example, there are trees of two types: hardwood and softwood. There are animals and there is vegetation.

In an example, a user with an audio information system has tuned in on the context 50A of trees, then only the trees will be available. Having the sub context 53A of softwood trees then only the left hand example context 50A will be available for establishing a zone 22 by the audio information system 1 processing. The rest is filtered out.

Likewise, having the sub context 53A of hardwood trees then only the right hand example context 50A will be available for establishing a zone 22.

In either case, each sub context state 53A will be represented according to the nature or character of the trees possibly along with their location.

In an example, a user is tuned in on the context 50B of the floor of the forest. Having the sub context 53A of vegetation then only the left hand example context 50B will be available for establishing a zone 22 by the audio information system 1 processing. The rest is filtered out.

Likewise, having the sub context 53B of animals then only the right hand example context 50A will be available for selecting a zone 22.

Again, each sub context state 53B will be represented according to the nature or character of the vegetation or the animals with their location.

In this particular example the user may be standing in a fixed position and whilst having the audio information system 1 in a context 50A of animals, the establishment 20 of a zone 22 may happen as the animals are in a vicinity of a user, in a particular area or in a particular situation.

In a further example, a user is tuned in on the context 50C of subterranean features or a sub context 53C, which could be steams, or reservoirs.

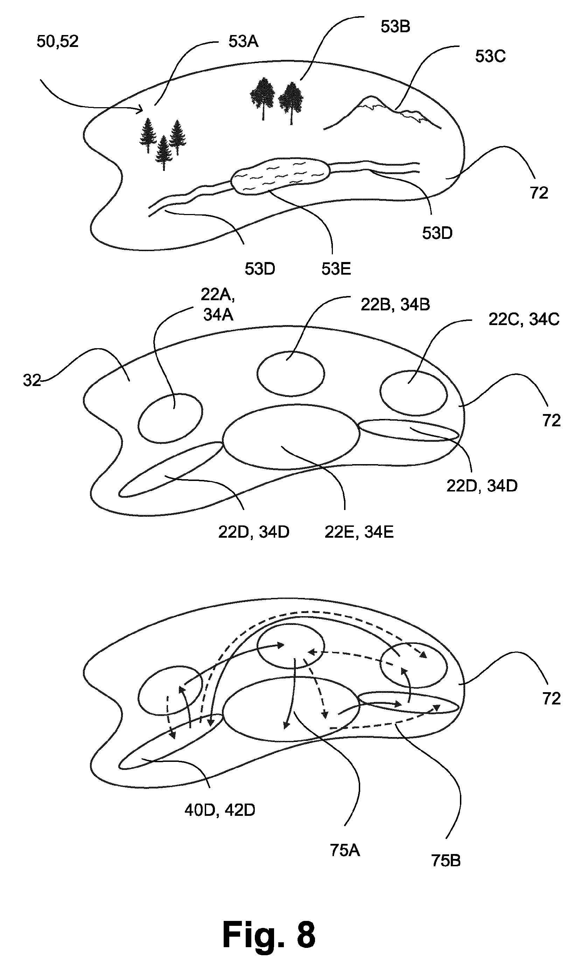

Fig. 8 illustrates a user 8 in an geographical local environment 72 in an urban setting or context 50 with context information 52 and with multiple sub contexts 53, a selection of context 50 and an establishment 20 of zones 22 and outside acoustic scenes 32A, 32B, routes 75A, 75B from a current geographical position 25 of the user 8, and the user 8 is in the zone inside 28 of a zone 22 with a sub context 53 resulting in an inside acoustic scene 34 which is a bar.

In more details, the audio based system 1 is worn by a user 8 standing at a position in a local environment 72, said environment is a cityscape with roads and buildings with different shops/restaurants of different multiple sub context 53,...

In a particular embodiment, the user tunes in on "bars" as a context or a sub context 53, and in this case there is a first bar context 53A and a second bar context 53B.

In another embodiment, the user is in a state of context of being thirsty 50 and the audio based system 1 then filters out possible solutions to this current context state of the user and returns bars 53A, 53B.

In another embodiment, the user is in an emotional state of context of being in a "party mood" 50, and the audio based information system 1 then enables and establishes 20 "party places" including the first bar 53A and the second bar 53B.

In either case, the context 50 in this local environment 72 results in the first bar and the second bar to emerge or be established 20 as zones 22A,22B and made available or identifiable to the user 8 in an outside acoustic scene 32.

In an embodiment, the audio based information systems 1 with a geographical position unit 60 and an orientation unit 62 and with a route planner or access to one will be able to provide a first route 75A from the current location to the first zone 20A and a second route 75B to the second zone 20B.

Say that the user 8 aims for the first zone 22A, then the audio information system 1 may be configured to navigate the user 8 along the first route 75A giving instructions and directions along the first route 75A to the first zone 22A with the outside acoustic scene 32 constantly representing a spatial relation of the first zone 22A to the user's 8 position and orientation.

As the user approaches or enters the first bar, the audio information system 1 changes from the outside acoustic scene 32 to a first inside acoustic scene 34A. This first inside acoustic scene 34A may comprise background music or ambient sound as a data object 12A. Drinks of different data object types 12B, 12C, 12D, ... may be acoustically rendered to form the acoustic scene 10 sounded into the ears of the user 8 by the audio unit 2.

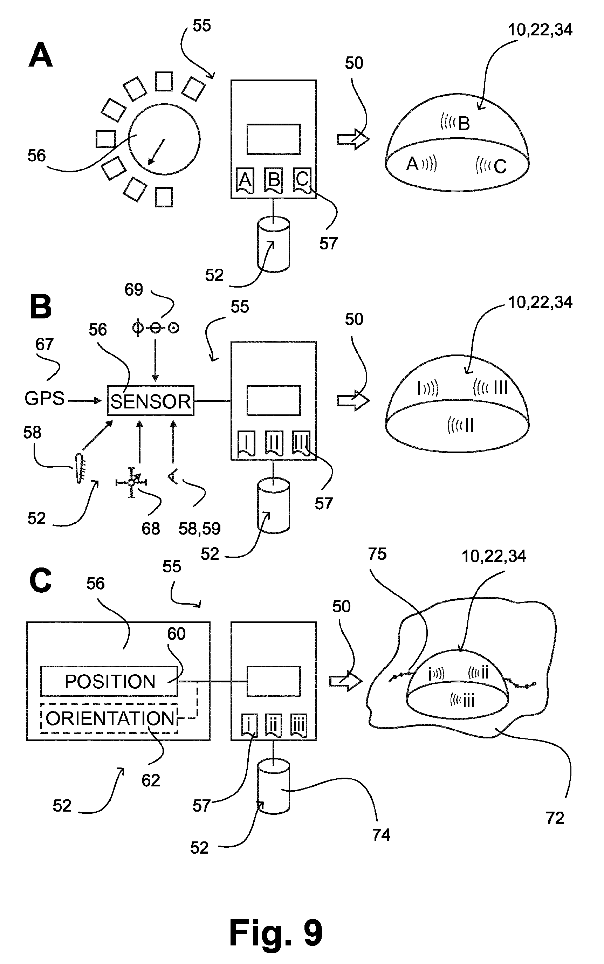

Fig. 9 illustrates an environment 72 with a context 50, context information 52 and multiple sub contexts 53, establishment 20 of zones 22 and different navigation routes 75 between the established zones 22.

In particular, softwood trees are a sub context 53A, hardwood trees are a sub context 53B, mountains are a sub context 53C, and a river or stream is a sub context 53D running into and out of a lake as a sub context 53D.

In this environment 72, the contexts 53 are each represented by a zone 22. The zones 22 are positioned relatively to each other and the audio information system 1 can acoustically render each context 53 to form an outside acoustic scene 32. Each zone 22 may also be established 20 with an inside acoustic scene 34.

Each zone 22 may be a teaching or a learning zone 22 with posts 40 and tasks 42 to be completed. A post 40D or a task 42 in the zone 22D established 20 for the river context 53D may contain learning related to a river.

In such implementation, a pupil 8 may have the task to explore and learn about different contexts 53. In particular a pupil 8 may complete the different zones 22 or learning posts 40 or tasks 42 by following a given route 75A, taking the pupil through all zones 22. Another route 75B may also take the pupil through all zones 22 and thereby enable more pupils to explore the overall context 50 at the same time without being in the exact same location or zone 22 at the same time.

The zones 22 and or the accociated acoustic scenes 10 may be collected in an ensemble. Such collection of zones 22 may be handled according to the invention collectively so that an ensemble can be established like an individual zone 22. In an embodiment such ensemble may be established based on the context.

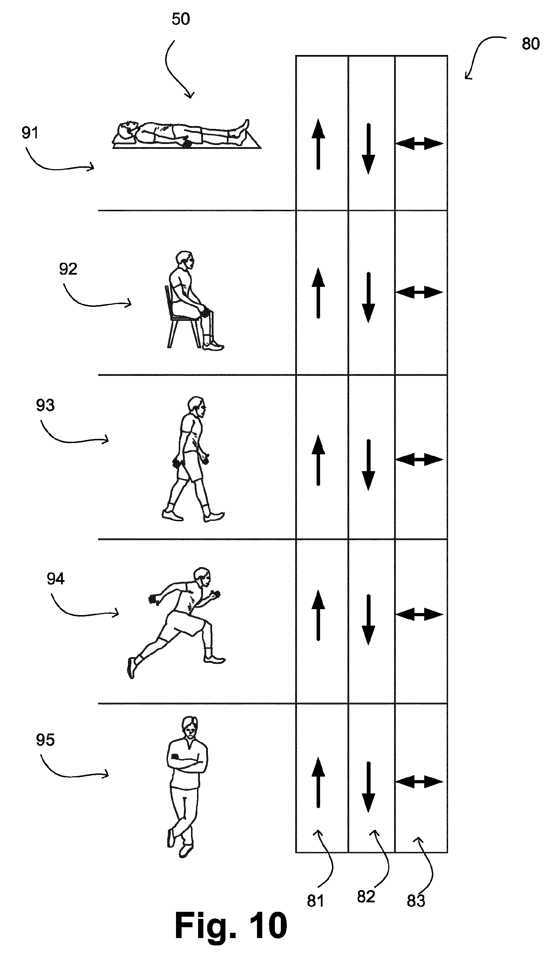

Fig. 10 illustrates an embodiment of context determining means 55 for determining a context 50. A illustrates means 55 for choosing predetermined contexts 57. B illustrates means 55 based on sensory means 56 comprising sensors 58 for determining a context 50. C illustrates means 55 of a geographical position, means 60 of information from a geographical server 74 to establish the context 50. In each case, the audio information system 1 is configured to establish 20 a zone 22 with an acoustic scene 10 being an outside acoustic scene 32 representing the zone 22 and an inside acoustic scene 34 with different objects acoustically rendered into the scene.

Fig. 10A shows a context determining means 55 with sensory means 56 configured as a selector configured to access predetermined contexts 57 from a context information 52 database or server thus forming a context 50, to which the audio information system 1 is configured to establish 20 a zone 22, which zone can be acoustically rendered into a an acoustic scene 10 either in an outside acoustic scene 32 (not shown here) and/or an inside acoustic scene 34.

Fig. 10B shows an embodiment where the sensory means 56 are based on one or more sensors 58. The sensory input may be processed by the audio information system 1 by an algorithm or a look up table resulting in an output based on predetermined contexts 57.

The sensor may be an audio/visual sensor 59 such as a microphone and a sound identifier configured to determine the nature or context of a sound. It could be the sound of traffic, an airport, a stadium, tranquillity, speech, etc.

The sensor may be a camera 59 with image processing capabilities so that the images or stream of images or other visual information is processed to yield a context 50. It may be the overall colour temperature determining if it is morning, day, evening or night. It may be a face recognition system identifying persons. It may be other similar identification procedures.

The sensor 58 may be an accelerometer 68 configured to provide input to be processed to determine a context 50. The accelerometer 68 located in the audio unit 2 worn by a user may give input that when processed determines the context 50 of the user based on the movements of the user.

The sensor 58 may be a gyroscope 69 configured to provide input to be processed to determine an orientation to be processed to determined a context 50. The user may be oriented with a line of sight towards a particular object with a context 50, said context 50 is then the context 50 of the user 8.

The sensor 58 may be a GPS unit 67 configured to provide input to be processed to determine a context 50. The GPS unit 67 output may indicate a particular location or the GPS unit 67 output may indicate a particular movement determining the context state of the user 50.

In either case of a sensory means 56 configuration, the audio based information unit 1 processes the sensory output to determine a context 50 from context information 52 by an algorithm or a look-up table.

Fig. 10C illustrates a particular embodiment of a sensory means 56 based on a position unit 60 and possibly an orientation unit 62 is disclosed. In this embodiment, the output of the position unit 60 being a location is cross-referenced information about the location in a geospatial information server 74. In a particular embodiment, the orientation from the orientation unit 60 defines a line of interest, which may point to a location based on information in the geospatial information server 74. This could be a line of sight as a function of the location and orientation intersecting with a point of interest such as a landmark, said landmark determines the context 50 and results in a zone 22 with an acoustic scene 10. In particular, the audio information system 75 may further be configured to provide a route 75 to the landmark and to acoustically navigate the user towards the landmark in a local environment 72.

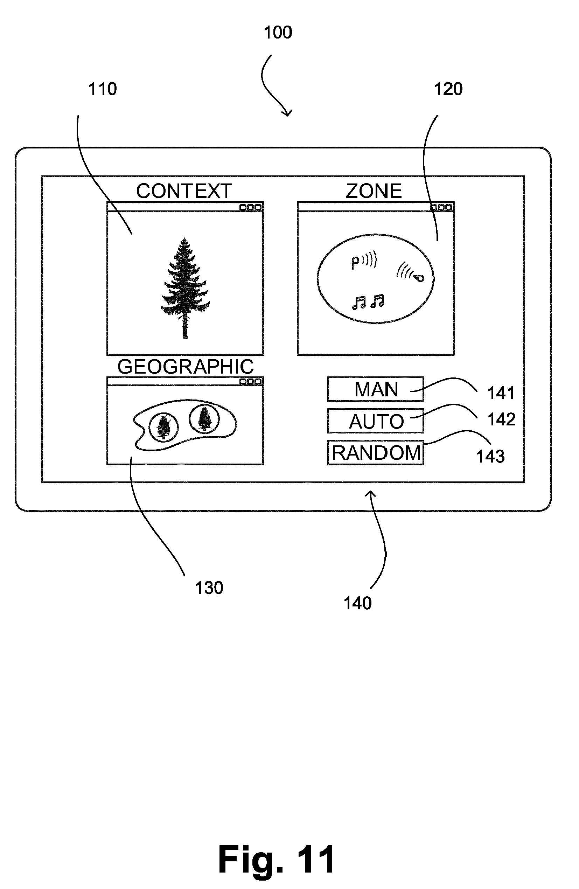

Fig. 11 illustrates and embodiment of a sensor determining contexts 50 such as "sleeping" 91, "sitting" 92, "walking" 93, "running" 94, or emotions 95 or moods such as "distressed", "happy", "party mood" of a person based on sensory inputs such as movements say by means of accelerometers 68, GPS unit 67 etc. and/or orientations say by means of a GPS unit 67, Gyroscopes 69 and alike means.

The sensory input may be processed by an algorithm or feed to a look-up table for the context 50 to be determined.

According to the context 50, the audio information system 1 may establish 20 a zone 22 as previously disclosed.

In particular, the audio based information systems 1 may be configured with means for modifying 80 the context 50. In one embodiment the modifier 80 will emphasize 81 the context 50. In an embodiment the modifier 80 will de-emphasize 82 the context 50 and in an embodiment the modifier 80 will maintain 83 the context 50.

In the context 50 of sleeping 91, the de-emphasizing 82 may include the establishment 20 of a wake-up zone 22 located away from where the user is asleep.

In the context 50 of distress 95A, the de-emphasizing 82 may include the establishment 20 of a calm zone 22 located away from where the user is at distress.

In the context 50 of running 94, the emphasizing 81 may include the establishment 20 of an attractive zone 22 with a beat just faster than the current pace of the runner just ahead of the runner thus attracting the runner towards that virtual point at a pace just faster than the current pace.

Fig. 12 illustrates a setup tool 100 of an audio information system 1 configured to interactively create, store, and edit an ensemble of at least one acoustic scene 10 and associate this with a context 50.

In one or more embodiments the setup tool may be configured to interactively create an ensemble 105 of zones 22, zones 22 and contexts 50, and/or zones 22, contexts 50 and geographic information. The setup tool may use the received personal information of at least one user to create one or more tailored ensemble.

The setup tool 100 may be implemented in a computational device or made available to a computational device. The setup tool 100 may include a context editor 110 configured to edit a context 50, context information 52, or a sub context 53.

The setup tool 100 may further include a zone editor 120 configured to edit a zone 22 and an acoustic scene 10 by use of acoustic representation of object data 12.

The setup tool 100 may further include a geographic editor 130 configured to edit the spatial layout or location of zones 22 and contexts 50. The geographic editor 130 may be configured with access or interaction to a geospatial information server 72.

The setup tool 100 may further be configured to manually setup using a manual setup algorithm141 a context 50, a zone 22 and/or geographical relations. Likewise, the setup tool 100 may further be configured with an auto setup algorithm 141 configured to optimally setup a context 50, a zone 22 and/or geographical relations. Finally, the setup tool may also be configured to setup the features randomly by a random setup algorithm 143.

## Claims

1. An audio information system (1) comprising
at least one audio unit (2) configured to be head worn and configured to communicate (3) with the at least one portable terminal (5) and which least one audio unit (2) configured to sound an acoustic scene (10) to a user using the least one audio unit (2); which
at least one portable terminal (5) configured to retrieve and render object data (12) into said acoustic scene (10) by an acoustic rendering algorithm (15) and to transmit said acoustic scene (10) to said at least one audio unit (2), which least one portable terminal (5) being configured to perform an establishment(20) of at least one zone (22) that spans a bounded space around a geographical position (25), which zone (22) has a zone outside (27) and an zone inside (28); and which
acoustic scene (2) is
an outside acoustic scene (32) when said least one audio unit (2) is not inside at least one zone (22) or
an inside acoustic scene (34) when said least one audio unit (2) is in the zone inside (28) of at least one zone (22).

2. An audio information system (1) according to claim 1, wherein the establishment (20) of at least one zone (22) is performed based on a context (50) of the audio unit (2) is in, is in the vicinity of, or is chosen to be in, and which context (50) is determined by a context determining means (55).

3. An audio information system (1) according to any of claims 1 to 2 wherein the audio unit (2) comprises a geographical position unit (60) configured to estimate the geographical position (25) of the audio unit (2).

4. An audio information system (1) according to any of claims 1 to 3 wherein the audio unit (2) comprises an orientation unit (62) for estimating a current orientation of a user when the user handles the orientation unit (62) in its intended operational position.

5. An audio information system (1) according to any of claims 1 to 4 wherein the portable terminal (5) is configured to communicate and share an acoustic scene (10) with at least one other terminal (5).

6. An audio information system (1) according to any of claims 2 to 5 configured to determine the context (50) by means of sensory means (56).

7. An audio information system (1) according to any of claims 3 to 6 configured to determine the context (50) as a function of context information () from a geographical server () or/and as a function of a geographical position () obtained by the geographical position means ().

8. An audio information system () according to any of claims 2 to 7 configured to determine a context (50) as a function of input from a movement detector such as an accelerometer (68), a gyroscope (69) and/or a GPS unit (67), which function is an algorithm, a lookup table configured to determine the context (50) amongst at least some predefined contexts (57) such as sleeping, sitting, walking, running, resting, emotions.

9. An audio information system (1) according to any preceding claim configured to establish an acoustic scene (10) that will alter the acoustic scene (10) by an altering object data (12) as a function of an algorithm or a lookup table so as to either emphasize a context (50), de-emphasize a context (50), maintain a context (50), split a context (50), merge more contexts (50A,50B), or morph more contexts (50A,50B).

10. An audio information system (1) wherein the inside acoustic scene information (34) comprising at least one post (40) preferably with a task (42).

11. A setup tool (100) of an audio information system (1) according to any of claims 1 to 10, which setup tool (100) is configured to interactively create, store, edit at least one acoustic scene (10) and associate said at least one acoustic scene (10) with at least one context (50).

12. A setup tool (100) of a audio information system (1) according to claim 11, wherein the setup tool (100) is further configured to access geospatial information (70) about a local environment (72) from a geospatial information server (74) and to setup at least one acoustic scene (10) to associate said at least one acoustic scene (10) with at least one context (50) as a function of the local environment (72).

13. A setup tool (100) of an audio information system (1) according to claim 10 or 11, wherein the setup tool is configured to make context information (52) about a context (50), at least one acoustic scene (10), and possibly a local environment (72) available to an audio information system (1).

14. A distribution system of an audio information system (2) according any of claim 1 to 10 and a setup tool (100) according to any of claim 11 to 13, which distribution system is configured to distribute at least one of an acoustic scene (10,32,34), a context (50), a local environment (72) so that an acoustic scene (10,32,34), a context (50), a local environment (72) are available to an audio information system (1).

15. A distribution system according to claim 14 and audio information system (1) according to any of claim 1 to 10, which distribution system and audio information system (1) are configured to make any acoustic scene (10), context (50), local environment (72), and available to an audio information system (1) at least by a method of subscription, a method of push technology, a method of pull technology, either configured as one-to-one or configured as one-to-many.
